# NEUE EUROPÄISCHE PATENTSCHRIFT

(11) **EP 1 311 631 B2**
(45) Veröffentlichungstag und Bekanntmachung des Hinweises auf die Entscheidung über den Einspruch: **25.02.2009**
(45) Hinweis auf die Patenterteilung: 06.04.2005
(21) Anmeldenummer: 01969569.1
(22) Anmeldetag: 03.08.2001
(51) Int. Cl.: C09D 5/33, C09D 7/12

(54) **FLÄCHIGES ELEMENT MIT DUNKLER OBERFLÄCHE UND VERMINDERTER SOLARER ABSORPTION**
FLAT ELEMENT HAVING A DARK SURFACE AND EXHIBITING A REDUCED SOLAR ABSORPTION
ELEMENT PLAT A SURFACE SOMBRE ET A ABSORPTION SOLAIRE REDUITE

(30) Priorität: 07.08.2000 DE 10038381
(43) Veröffentlichungstag der Anmeldung: 21.05.2003
(73) Patentinhaber: BASF SE, 67056 Ludwigshafen (DE)
(72) Erfinder: Hugo, Gerd, 86938 Schondorf (DE)
(74) Vertreter: HOFFMANN EITLE
(86) Internationale Anmeldenummer: PCT/EP2001/009020
(87) Internationale Veröffentlichungsnummer: WO 2002/012405

(56) Entgegenhaltungen:
- EP-A- 1 127 926
- DE-A- 19 540 682
- DE-A- 19 928 235
- US-A- 4 311 623
- US-A- 4 546 045
- US-A- 4 916 014
- US-A- 5 540 998

## Beschreibung

### Technisches Gebiet

Die vorliegende Erfindung betrifft eine flächiges Element, bestehend aus einem Substrat und einer Beschichtung des Substrates. Dabei sind sowohl das Substrat wie auch die Oberfläche des flächigen Elements im sichtbaren Bereich dunkel eingefärbt. Im Bereich des nahen Infrarot hat das flächige Element eine hohe Reflexion, um trotz der dunklen Einfärbung im sichtbaren Bereich die Erwärmung unter Sonnenlicht zu verringern. Zur Anwendung kommt eine solches flächiges Element auf allen Flächen, die aus ästhetischen oder aus technischen Gründen dunkel eingefärbt sind, sich aber unter Sonnenlicht nicht aufheizen sollen und wo bei Beschädigung der Beschichtung die dunkle Farbwirkung erhalten bleibt.

### Stand der Technik

Oberflächen, die aus ästhetischen oder auch aus technischen Gründen dunkel eingefärbt oder beschichtet sind und die dem Sonnenlicht ausgesetzt sind, haben die meist unangenehme Eigenschaft, sich je nach Farbtiefe mehr oder weniger aufzuheizen.

Gerade in kleineren Räumlichkeiten, wie z.B. in einem Fahrzeug, sei es ein PKW, ein LKW, ein Bus oder auch die Innenräume von Eisenbahnen, wird die solare Aufheizung dunkler Flächen als äußerst unangenehm empfunden. Die dunklen Flächen heizen sich je nach solarem Absorptionsgrad mehr oder weniger auf und geben ihre Wärme als Wärmestrahlung in den Innenraum ab. Diese Wärme muß dann mit einer Klimaanlage kompensiert werden, was den Energieverbrauch des Fahrzeuges erheblich steigert.

In einem Fahrzeug gibt es Flächen, die aus technischen Gründen dunkel eingefärbt sein müssen. Die vordere Ablage in einem PKW ist hierfür ein gutes Beispiel. Wäre die Frontablage hell eingefärbt, so würde sie sich in der Windschutzscheibe spiegeln und dem Fahrer die Sicht auf die Straße erschweren. Sie muß also zwangsläufig dunkel eingefärbt sein. Da diese Fläche direkt unter der Windschutzscheibe liegt, ist sie der solaren Strahlung am meisten ausgesetzt und heizt sich entsprechend auf. Neben der unangenehmen Aufheizung des Fahrzeuges bedingt die starke Erwärmung der dunklen Oberflächen natürlich auch eine schnellere Materialermüdung bei den betroffenen Flächen.

Aus eher ästhetischen Gründen sind Ledersitze in PKW's überwiegend in dunklen Grautönen, meist sogar in schwarz ausgeführt. Steht ein solches Fahrzeug nun einige Zeit in der Sonne und sind die Ledersitze dem Sonnenlicht ausgesetzt, so heizen sie sich so stark auf, dass man sich kaum noch hineinsetzen kann.

Noch unangenehmer ist die solare Erwärmung von dunklen Lenkrädern, da man sie meist ohne jede Bekleidung mit nackter Hand anfassen muß.

In der PCT/EP96/04703 wird ein Beschichtungsmittel zur Herstellung von Wärmestrahlen reflektierenden Überzügen vorgestellt. Hier wird eine Beschichtung beschrieben, die eine höhere Reflexion für Sonnenlicht im Bereich des nahen Infrarot hat. Nachteilig ist hier, dass alle Stoffe, die eine höhere Reflexion des Sonnenlichtes im nahen Infrarot bewirken, in einer Schicht untergebracht werden müssen.

Dies hat zur Folge, dass bei der Herstellung sehr dunkler und schwarzer Farbtöne die Reflexion des Sonnenlichtes im nahen Infrarotbereich nur noch geringfügig höher ist, da bei höheren Füllgraden mit reflektierenden Stoffen die Reflexion auch im sichtbaren Bereich ansteigt.

Nachteilig ist weiterhin, dass bei Beschädigung der Beschichtung der normale Untergrund zum Vorschein kommt, der keine erhöhte Reflexion des Sonnenlichtes bewirkt und somit an dieser Stelle der Effekt aufgehoben wird.

Wäre der Untergrund weiß eingefärbt, würde sich zwar die erhöhte Sonnenlichtreflexion einstellen, allerdings ist dies aus ästhetischen Gründen nicht möglich, da überall wo die Beschichtung beschädigt oder nicht mehr vorhanden ist, der weiße Untergrund zum Vorschein käme.

US 4,546,045 beschreibt eine Beschichtungszusammensetzung umfassend ein filmbildendes Polymer und ein IR-reflektives Pigment.

DE 199 28 235 A1 offenbart eine spektralselektive Beschichtung, die enthält:
a) ein Bindemittel mit einer Transmission, größer 60% im Wellenlängenbereich des nahen Infrarots von 0,7 bis 2,5 µm und einer Transmission größer 40%, im Wellenlängenbereich des thermischen Infrarots von 2,5 bis 50 µm,
b) erste Pigmente, die im Wellenlängenbereich von 0,35 bis 0,7 µm mehr als 40% des sichtbaren Lichtes selektiv absorbieren, im nahen Infrarot von 0,7 bis 2,5 µm eine Rückstreuung größer 40 % und im Wellenlängenbereich des thermischen Infrarots von 2,5 bis 60 µm eine Transmission größer 40% haben,
c) zweite Pigmente, die im Wellenlängenbereich des thermischen Infrarots von 2,5 bis 50 µm eine Rückstreuung und/oder Reflexion größer 40% haben.

Aufgabe der vorliegenden Erfindung ist es ein Trägermaterial darzustellen, das bei gleicher Einfärbung im sichtbaren Bereich wie die darüberliegende Beschichtung eine hohe Reflexion im nahen Infrarotbereich aufweist und das mit einer Beschichtung versehen ist, die im sichtbaren Bereich dunkel ist und im Bereich des nahen Infrarot überwiegend transparent und/oder selber reflektiv ist und durch einen normalen Füllgrad mit Pigmenten auch allen mechanischen Anforderungen im späteren Einsatz gewachsen ist.

### Darstellung der Erfindung

Erfindungsgemäß wird dies gelöst durch ein flächiges Element mit dunkler Oberfläche und verminderter solarer Absorption, das umfaßt,
a) ein Substrat, dessen Reflexion im Bereich des sichtbaren Lichtes von 380 bis 720 nm kleiner 50 % und im Bereich des nahen Infrarot von 720 bis 1500 nm größer 60% ist,
b) eine Beschichtung des Substrates bestehend aus einem Bindemittel, das im Spektralbereich von 380 bis 1500 nm eine Transparenz größer 70% hat, und ersten Pigmenten, die im Bereich des sichtbaren Lichtes von 380 bis 720 nm eine geringe Reflexion der Beschichtung kleiner 50% bewirken und im Spektralbereich des nahen Infrarot von 720 nm bis 1500 nm eine Transparenz größer 50% aufweisen und/oder zweiten Pigmenten, die im Bereich des sichtbaren Lichtes von 380 bis 720 nm eine geringe Reflexion der Beschichtung kleiner 50% bewirken und im Spektralbereich des nahen Infrarot von 720 nm bis 1500 nm eine Reflexion größer 40%, vorzugsweise größer 50%, besonders bevorzugt größer 60% aufweisen.

Die Beschichtung kann als eine Schicht oder in mehreren dünnen Schichten auf das Substrat aufgetragen werden.

Unter "dunkel" ist im Kontext dieser Anmeldung zu verstehen, dass die Reflexion der Anordnung im Wellenlängenbereich des sichtbaren Lichtes von 380 bis 720 nm unter 50% liegt. Unter Reflexion ist hierbei die über den angegebenen Wellenlängenbereich gemittelte Reflexion zu verstehen; das Gleiche gilt für die Begriffe "Transmission", "Absorption" und "Rückstreuung".

Vorteilhafte Weiterbildungen des Erfindungsgedankens ergeben sich aus den Unteransprüchen.

Eine vorteilhafte Weiterbildung des Erfindungsgedankens ist dadurch gegeben, dass es sich bei dem Substrat um ein faseriges Material handelt, das ausgewählt ist aus der Gruppe der Kunststoffe, ausgewählt aus Kunstleder, ausgewählt aus Vliesstoffen oder Geweben aus Polyethylen, Polypropylen, Polyester, Nylon und Acetaten wie Celluloseacetat, aus der Gruppe der natürlichen Materialien, ausgewählt aus Leder, ausgewählt aus Vliesstoffen oder Geweben aus Sisal, Hanf, Zellstoff, Baumwolle und aus Seide.

Eine vorteilhafte Weiterbildung des Erfindungsgedankens ist dadurch gegeben, dass es sich bei dem Substrat um ein geschäumtes, vorzugsweise reaktiv und/oder mechanisch geschäumtes Material handelt, das ausgewählt ist aus der Gruppe der Kunststoffe, ausgewählt aus Polyethylen, Polypropylen, Polyester, Nylon, ABS, Epoxy, Polyurethan und PVC.

Eine vorteilhafte Weiterbildung des Erfindungsgedankens ist dadurch gegeben, dass es sich bei dem Substrat um ein Material handelt, das ausgewählt ist aus der Gruppe der Kunststoffe, ausgewählt aus Polyethylen, Polypropylen, Polyester, Nylon, ABS, Epoxy, Polyurethan und PVC und das mit Füllstoffen zu 40 bis 80 Volumenprozenten gefüllt ist, die im Wellenlängenbereich von 380 bis 1500 nm eine Transparenz größer 70% haben und deren Teilchengröße so gewählt ist, dass sie im sichtbaren Bereich eine geringe Rückstreuung haben. Eine Rückstreuung ist erfindungsgemäß dann gering, wenn sie weniger als 50 % der Eingangsstrahlung beträgt.

Eine vorteilhafte Weiterbildung des Erfindungsgedankens ist dadurch gegeben, dass das Substrat nach Trocknung aus einem zunächst flüssigen Bindemittel gebildet ist, das mit Füllstoffen zu 40 bis 80 Volumenprozenten gefüllt ist, die im Wellenlängenbereich von 380 bis 1500 nm eine Transparenz größer 70% haben und deren Teilchengröße so gewählt ist, dass sie im sichtbaren Bereich eine geringe Rückstreuung haben.

Es wird erfindungsgemäß bevorzugt, dass die Reflexion des Substrates im Spektralbereich des sichtbaren Lichtes von 380 bis 720 nm von kleiner 50 % durch Einfärbung mit löslichen Farbstoffen oder mit Pigmenten bedingt ist.

Die löslichen Farbstoffe sind vorzugsweise wasserlösliche Farbstoffe oder Farbstoffe, die mit Lösungsmitteln gelöst werden. Die Gruppe der wasserlöslichen Farbstoffe umfasst saure Farbstoffe, substantive Farbstoffe, basische Farbstoffe, Entwicklungsfarbstoffe, Schwefelfarbstoffe und Anillinfarbstoffe; die Gruppe der Farbstoffe, die mit organischen Lösemitteln gelöst werden, umfasst insbesondere Zaponfarbstoffe. Die löslichen Farbstoffe werden vorzugsweise in einer Menge von 0,2 bis 10 Gew.%, bevorzugter 2 bis 6 Gew.% in bezug auf die Formulierung verwendet.

Eine vorteilhafte Weiterbildung des Erfindungsgedankens ist dadurch gegeben, dass die ersten Pigmente, die im Bereich des sichtbaren Lichtes von 380 bis 720 nm eine geringe Reflexion der Beschichtung kleiner 50% bewirken und im Bereich des nahen Infrarot von 720 bis 1500 nm eine hohe Transparenz größer 50% haben, ausgewählt sind aus der Gruppe der organischen Pigmente, ausgewählt aus der Gruppe der Azopigmente, ausgewählt aus Monoazo-, Disazo-, β-Naphtol-, Naphtol AS-, verlackte Azo-, Benzimidazolon-, Disazokondensations-, Metallkomplex-, Isoindolinon und Isoindolin-Pigmenten, ausgewählt aus der Gruppe der polycyclischen Pigmente, ausgewählt aus, Phthalocyanin-, Chinacridon-, Perrylen- und Perinon-, Thioindigo-, Anthrachinon-, Anthrapyrimidin-, Flavanthron-, Pyranthron-, Anthanthron-, Dioxazin-, Triarylcarbonium-, Chino-phthalon-, Diketo-pyrrolo-pyrrol-Pigmente. Die ersten Pigmente werden vorzugsweise in einer Menge von 0,2 bis 20 Gew.%, bevorzugter 0,7 bis 10 Gew.% in bezug auf die Gesamtformulierung zur Herstellung der Beschichtung verwendet.

Eine vorteilhafte Weiterbildung des Erfindungsgedankens ist dadurch gegeben, dass die zweiten Pigmente, die im Bereich des sichtbaren Lichtes von 380 bis 720 nm eine geringe Reflexion der Beschichtung kleiner 50% bewirken und im nahen Infrarot von 720 bis 1500 nm eine Reflexion größer 40% haben, ausgewählt sind aus der Gruppe der anorganischen Pigmente, ausgewählt aus der Gruppe der Metalloxide und -Hydroxide, aus Cadmium-, Wismut-, Chrom-, Ultramarinpigmenten, ausgewählt aus der Gruppe der beschichteten, plättchenförmigen Glimmerpigmente, ausgewählt insbesondere aus der Gruppe der Rutil- und Spinellmischphasenpigmente. Die zweiten Pigmente werden vorzugsweise in einer Menge von 4 bis 50 Gew.%, bevorzugter 10 bis 40 Gew.% in bezug auf die Gesamtformulierung zur Herstellung der Beschichtung verwendet.

Eine vorteilhafte Weiterbildung des Erfindungsgedankens ist dadurch gegeben, dass die Füllstoffe ausgewählt sind aus der Gruppe der abbaubaren Mineralien, ausgewählt aus Metalloxiden, ausgewählt aus Aluminiumoxid, Magnesiumoxid, Quarz, ausgewählt aus Mischungen von Metalloxiden, ausgewählt aus Zirkonsilikat, Tonerde, ausgewählt aus Metallcarbonaten, ausgewählt aus Calciumcarbonat, ausgewählt aus Metallsulfaten, ausgewählt aus Bariumsulfat, deren durchschnittliche Teilchengröße durch Vermahlen im Mittel auf 1 bis 3 µm eingestellt ist. Die Füllstoffe werden vorzugsweise in einer Menge von 1 bis 45 Gew.%, bevorzugter 8 bis 35 Gew.% in bezug auf die Formulierung verwendet.

Eine vorteilhafte Weiterbildung des Erfindungsgedankens ist dadurch gegeben, dass das Bindemittel ausgewählt ist
aus der Gruppe der lösemittelhaltigen Bindemittel, umfassend Acrylate, Methacrylate, Styrol-Acrylate, Styrol-Methacrylate, ausgewählt aus substituierten Polyolefinen, ausgewählt aus. Polystyrol und Styrol-Copolymere, Alkydharze, ausgewählt aus gesättigten und ungesättigten Polyestern oder Polyamiden, Polyimiden, Polyurethanen, Polyethern, Epoxidharzen, Silikonen, chlorsulfoniertem Polyäthylen, fluorierten Polymeren ausgewählt aus fluorierten Acryl-Copolymeren oder Fluorsilikonen.
ausgewählt aus der Gruppe der wässrigen Bindemittel, umfassend die Gruppe der wasserlöslichen Binder aus Alkyden, Polyester, Polyacrylate, Epoxide und Epoxid-ester, aus der Gruppe der wässrigen Dispersionen und Emulsionen, die umfasst, Dispersionen und Emulsionen auf der Basis von, Acrylat, Methacrylat, Styrol-Acrylat, Polyäthylen, Polyäthylen-Oxidat, Ethylen-Acrylsäure-Copolymere, Methacrylat, Vinylpyrrolidon-Vinylacetat-Copolymere, Polyvinylpyrrolidon, Polyisopropylacrylat, Polyurethane, Wachsdispersionen auf der Basis von Polyethylen, Polypropylen, Teflon®, synthetische Wachse, fluorierte Polymere, fluoriertes Acryl-Copolymer in wässriger Lösung, Fluorsilikone.

Das Bindemittel wird vorzugsweise in einer Menge von 20 bis 90 Gew.%, bevorzugter 30 bis 80 Gew.% in bezug auf die Gesamtformulierung zur Herstellung der Beschichtung verwendet.

Eine vorteilhafte Weiterbildung des Erfindungsgedankens ist dadurch gegeben, dass die durchschnittliche Teilchengröße der ersten Pigmente kleiner 0.9 µm ist und die durchschnittliche Teilchengröße der zweiten Teilchen größer oder gleich 0.9 µm ist.

Eine vorteilhafte Weiterbildung des Erfindungsgedankens ist dadurch gegeben, dass die Reflexion des Substrates im Spektralbereich 720 bis 1500 nm größer 70% ist.

Eine vorteilhafte Weiterbildung des Erfindungsgedankens ist dadurch gegeben, dass die Reflexion des Substrates mit löslichen Farbstoffen und/oder der Beschichtung im Spektralbereich des sichtbaren Lichtes von 380 bis 720 nm weniger als 40% beträgt.

Eine vorteilhafte Weiterbildung des Erfindungsgedankens ist dadurch gegeben, dass die ersten und/oder zweiten Pigmente im Bereich des sichtbaren Lichtes von 380 bis 720 nm eine geringe Reflexion der Beschichtung des Substrates kleiner 40% bewirken.

Eine vorteilhafte Weiterbildung des Erfindungsgedankens ist dadurch gegeben, dass der mechanische Schaum durch Einlagerung von Mikrohohlkugeln aus Glas oder Kunststoff gebildet ist.

Eine vorteilhafte Weiterbildung des Erfindungsgedankens ist dadurch gegeben, dass die Schichtdicken des Substrates im Bereich von 10 µm bis 8 mm liegen, insbesondere im Bereich von 20 µm bis 6 mm liegen.

Eine vorteilhafte Weiterbildung des Erfindungsgedankens ist dadurch gegeben, dass die Schichtdicken der Beschichtung im Bereich von 10 µm bis 500 µm liegen, insbesondere im Bereich von 20 µm bis 300 µm liegen.

### Figuren

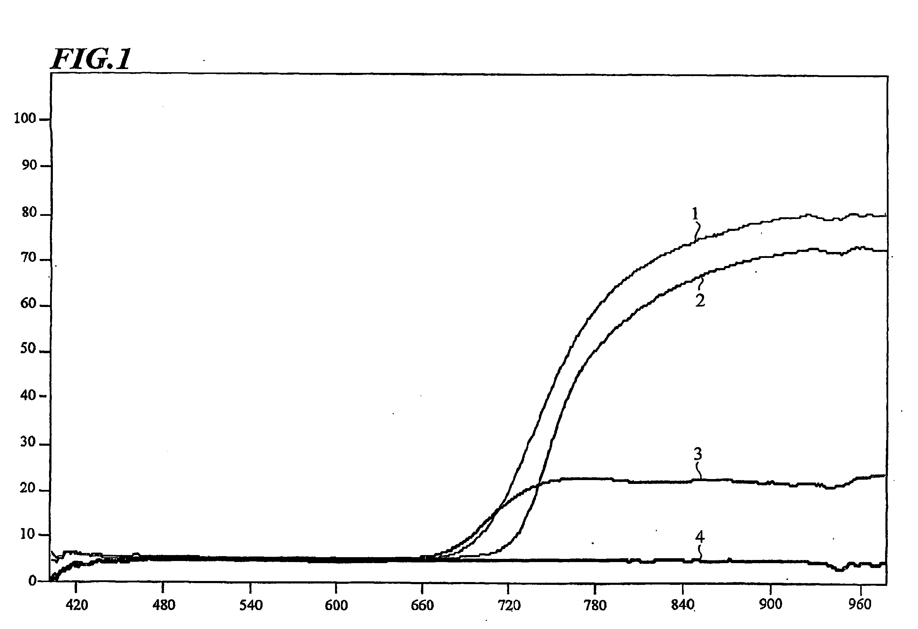

Die Figuren 1 bis 11 zeigen Kurven der hemisphärischen Rückstreuung, aufgenommen mit dem PC-Einschub-Spektrometer PC 2000 der Fa. Avantes, mit einer spektralen Empfindlichkeit von 320 bis 1100 nm mit einer daran angeschlossenen Ulbrichtkugel, für die in den Beispielen 1 bis 7 bzw. 10 bis 13 erhaltenen Substrate bzw. Elemente.

### Beispiele

Der Erfindungsgegenstand wird im Folgenden anhand von Beispielen näher erläutert.

### Beispiel 1: Beschichtung eines Leders und Vergleichsbeispiel

a) Ein Leder wird mit folgender Mischung schwarz eingefärbt:
- Acid Black Mixture:: (Sella Fast Black® HS-02 + Sella Fluid Black® M-M der Firma TFL USA/Canada Inc.).

b) Auf dem gemäß a) gefärbten Leder wird eine schwarze Beschichtung hergestellt aus:

| | |
|---|---|
| 80,00 g | Rodia Base® VL 8108 der TFL USA/Canada Inc. (Bindemittel). |
| 15,00 g | Tönpaste Schwarz aus: |
| | 20 Gewichtsteilen Paliogen® Schwarz L0086 der BASF , |
| | 80 Gewichtsteilen Butylenglykol, |
| 0,90 g | QWD® 0108 Magenta der Sun Chemical, |
| 12,00 g | Wasser. |

Die Beschichtung wird mit einem Spiralrakel 3 x 100 µm naß auf das vorgefärbte Leder aufgetragen und anschliessend getrocknet.

### Vergleichsbeispiel:

Ein standardmäßig schwarz vorgefärbtes Leder wird mit einer schwarzen Standardbeschichtung beschichtet. Die Standardbeschichtung besteht aus einer Acryl-Copolymer Emulsion und einer wässrigen Polyurethandispersion, die mit handelsüblichen Wachsen, Füllstoffen, Kasein und Öl anwendungsspezifisch eingestellt wird. Zur schwarzen Einfärbung werden dieser Bindemittelmischung eine wässrige. Pigmentdispersion schwarzem Eisenoxid und eine wässrige Russdispersion beigefügt.

Die spektrale Reflexion der Proben wird im Bereich 400 bis 980 nm vermessen (Messgerät: PC-Einschub-Spektrometer PC 2000 der Fa. Avantes, mit einer spektralen Empfindlichkeit von 320 bis 1100 nm mit einer daran angeschlossenen Ulbrichtkugel zur Messung der hemisphärischen Rückstreuung von Oberflächen); die Messergebnisse sind in Figur 1 dargestellt.

Die Messergebnisse in Figur 1 zeigen (1) die spektrale Reflexion des erfindungsgemäß zu verwendenden eingefärbten Leders gemäß Beispiel 1a), (2) die spektrale Reflexion des erfindungsgemäß beschichteten Leders gemäß Beispiel 1b) und (3) die spektrale Reflexion des standardmäßig vorgefärbten Leders und (4) die spektrale Reflexion des standardmäßig beschichteten Leders gemäß Vergleichsbeispiel.

Die Proben werden auf eine Styroporplatte geklebt und unter 98000 Lx Sonneneinstrahlung mit einem Strahlungsthermometer vermessen.

Das erfindungsgemäß beschichtete schwarze Leder erwärmt sich auf 54°C.
Das schwarze Leder gemäß Vergleichsbeispiel erwärmt sich auf 67°C.

### Beispiel 2: Beschichtung eines Leders und Vergleichsbeispiel

a) Ein Leder wird mit folgender Mischung grau eingefärbt:
Acid Black 213 (Sella Fast Grey® C-LL der Firma TFL USA/Canada Inc.).

b) Es wird eine graue Beschichtung hergestellt aus

| | |
|---|---|
| 80,00 g | Rodia Base® VL 8108 der TFL USA/Canada Inc. (Bindemittel). |
| 03,50 g | Tönpaste Schwarz aus: |
| | 20 Gewichtsteilen Paliogen® Schwarz L0086 der BASF, |
| | 80 Gewichtsteilen Butylenglykol, |
| 10,50 g | Ropaque® OP 62 von Rohm & Haas, |
| 00,13 g | QWD® 0108 Magenta der Sun Chemical, |
| 12,00 g | Wasser. |

Die Beschichtung wird mit einem Spiralrakel 3 x 100 µm naß auf das gemäß a) gefärbte Leder aufgetragen.

### Vergleichsbeispiel:

Ein standardmäßig grau vorgefärbtes Leder wird mit einer grauen Standardbeschichtung beschichtet. Die Standardbeschichtung besteht aus einer Acryl-Copolymer Emulsion und einer wässrigen Polyurethandispersion, die mit handelsüblichen Wachsen, Füllstoffen, Kasein und Öl anwendungsspezifisch eingestellt wird. Zur grauen Einfärbung werden dieser Bindemittelmischung wässrige Pigmentdispersionen aus Titandioxid (Rutil), schwarzem Eisenoxid und eine wässrige Russdispersion beigefügt.

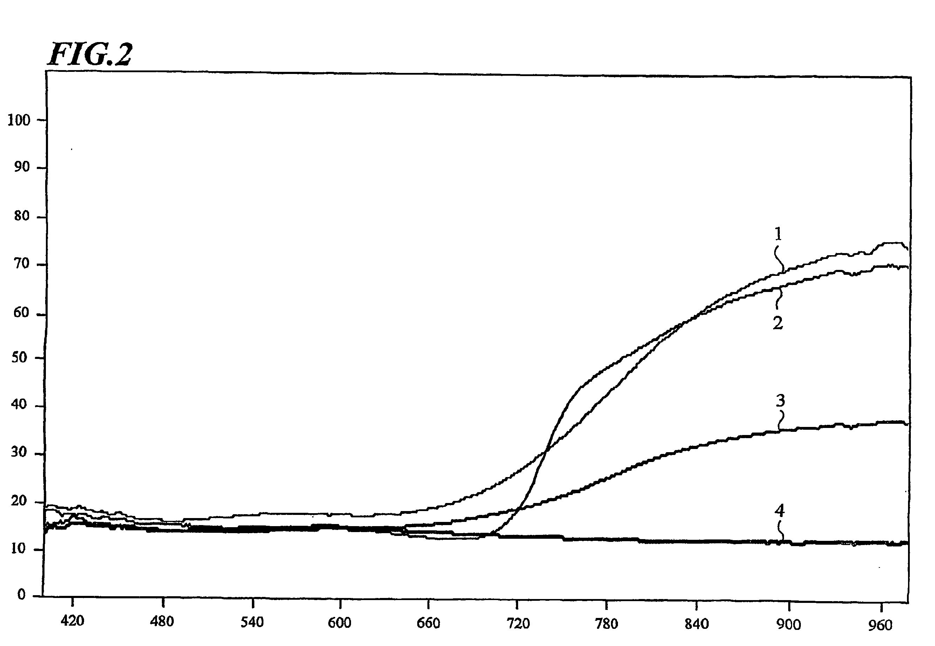

Die spektrale Reflexion der Proben wird im Bereich von 400 bis 980 nm vermessen, die Messergebnisse sind in Figur 2 dargestellt.

Die Messergebnisse in Figur 2 zeigen (1) die spektrale Reflexion des erfindungsgemäß zu verwendenden eingefärbten Leders gemäß Beispiel 2a), (2) die spektrale Reflexion des erfindungsgemäß beschichteten Leders gemäß Beispiel 2b) und (3) die spektrale Reflexion des standardmäßig grau vorgefärbten Leders und (4) die spektrale Reflexion des standardmäßig grau beschichteten Leders aus dem Vergleichsbeispiel.

Die Proben werden auf eine Styroporplatte geklebt und unter 98000 Lx Sonneneinstrahlung mit einem Strahlungsthermometer vermessen.

Das erfindungsgemäße graue Leder erwärmt sich auf 53,5°C. Das graue Leder gemäß Vergleich erwärmt sich auf 64,5°C.

### Beispiel 3: Beschichtung von Leinen und Vergleichsbeispiel

a) Ein Textilgewebe aus gebleichtem Leinen wird mit den wasserlöslichen Farbstoffen D&C Red #33 und D&C Green #5 der Firma Simple Pleasures, Old Saybrook, CT 06474-1253, USA schwarz vorgefärbt.
b) Es wird eine schwarze Beschichtung hergestellt aus:

| | |
|---|---|
| 80,00 g | Rodia Base ® VL 8108 der TFL USA/Canada Inc.. |
| 15,00 g | Tönpaste Schwarz aus: |
| | 20 Gewichtsteilen Paliogen® Schwarz L0086 der BASF, |
| | 80 Gewichtsteilen Butylenglykol, |
| 00,90 g | QWD® 0108 Magenta der Sun Chemical, und |
| 12,00 g | Wasser. |

Die Beschichtung wird mit einem Spiralrakel 3 x 100 µm naß auf das vorgefärbte Textilgewebe aufgetragen.

### Vergleichsbeispiel

Ein standardmäßig schwarz vorgefärbtes Textilgewebe wird mit einer scharzen Standardbeschichtung beschichtet. Die Standardbeschichtung besteht aus einer Acryl-Copolymer Emulsion und einer wässrigen Polyurethandispersion. Zur schwarzen Einfärbung werden dieser Bindemittelmischung wässrige Pigmentdispersion aus schwarzem Eisenoxid und eine wässrige Russdispersion beigefügt

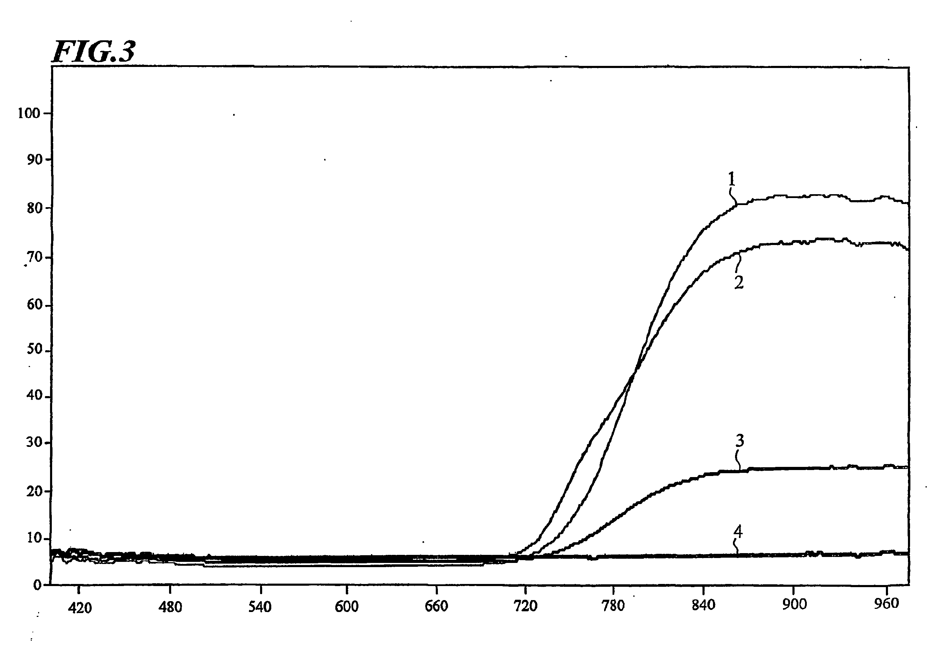

Die spektrale Reflexion der Proben wird im Bereich 400 bis 980 nm vermessen, die Messergebnisse sind in Figur 3 dargestellt.

Die Meßergebnisse in Figur 3 zeigen (1) die spektrale Reflexion des erfindungsgemäß zu verwendenden eingefärbten Textilgewebes gemäß Beispiel 1a), (2) die spektrale Reflexion des erfindungsgemäß beschichteten Textilgewebes gemäß Beispiel 1b) und (3) die spektrale Reflexion des standardmäßig vorgefärbten Textilgewebes und (4) die spektrale Reflexion des standardmäßig beschichteten Gewebes gemäß Vergleich.

Die Proben werden auf eine Styroporplatte geklebt und unter 98000 Lx Sonneneinstrahlung mit einem Strahlungsthermometer vermessen.

Das erfindungsgemäß beschichtete schwarze Textilgewebe erwärmt sich auf 54,5°C. Das schwarze Textilgewebe gemäß Vergleich erwärmt sich auf 67,5°C.

### Beispiel 4: Beschichtung eines Vliess und Vergleich

a) Ein Wirrvlies aus Polyethylen wird mit einer Mischung aus Zapon® Schwarz X 50 der BASF und Nitroverdünnung dunkelgrau bis schwarz eingefärbt.
b) Es wird eine graue Beschichtung hergestellt aus

| | |
|---|---|
| 80,00 g | Rodia Base® VL 8108 der TFL USA/Canada Inc.. |
| 03,50 g | Tönpaste Schwarz aus |
| | 20 Gewichtsteilen Paliogen® Schwarz L0086 der BASF, |
| | 80 Gewichtsteilen Butylenglykol, |
| 10,50 g | Ropaque® OP 62 von Rohm & Haas, |
| 00,13 g | QWD® 0108 Magenta der Sun Chemical, |
| 12,00 g | Wasser. |

Die Beschichtung wird mit einem Spiralrakel 3 x 100 µm naß auf das vorgefärbte Wirrvlies aufgetragen und getrocknet.

### Vergleichsbeispiel:

Das gleiche Wirrvlies wurde mit einer grauen Standardbeschichtung beschichtet. Die Standardbeschichtung bestand aus einer Acryl Copolymer Emulsion und einer wässrigen Polyurethandispersion. Zur grauen Einfärbung werden dieser Bindemittelmischung wässrige Pigmentdispersionen aus Titandioxid (Rutil), schwarzem Eisenoxid und eine wässrige Russdispersion beigefügt.

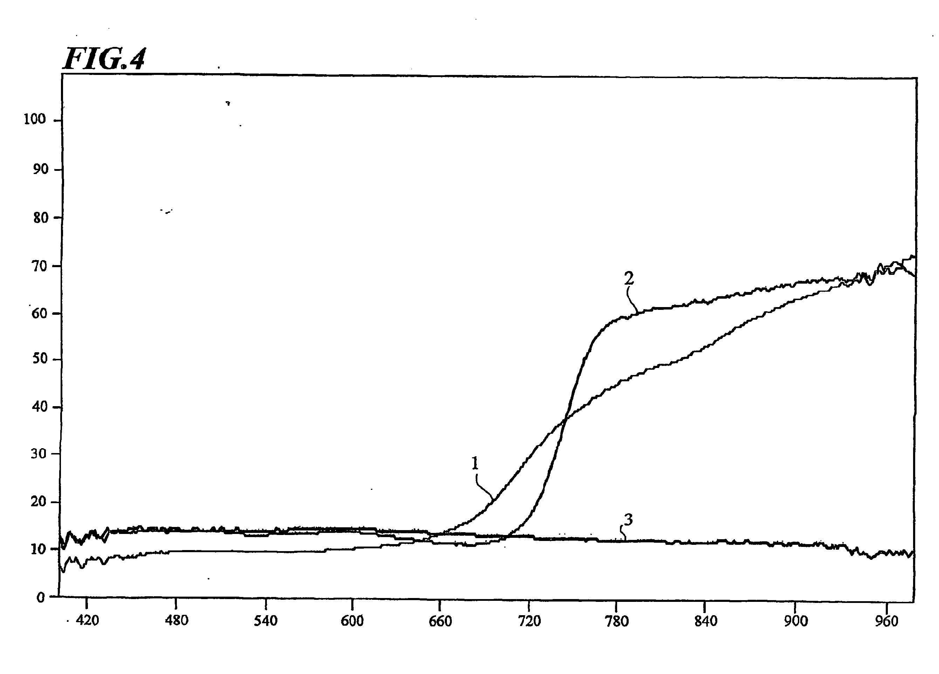

Die spektrale Reflexion der Proben wurde im Bereich 400 bis 980 nm vermessen, die Meßergebnisse sind in Figur 4 dargestellt.

Die Messergebnisse in Figur 4 zeigen (1) die spektrale Reflexion des erfindungsgemäß zu verwendenden eingefärbten Wirrvlies gemäß Beispiel 4a), (2) die spektrale Reflexion des erfindungsgemäß beschichteten Wirrvlies gemäß Beispiel 4b) und (3) die spektrale Reflexion des Wirrvlies gemäß Vergleichsbeispiel.

Die Proben werden auf eine Styroporplatte geklebt und unter 98000 Lx Sonneneinstrahlung mit einem Strahlungsthermometer vermessen.

Das erfindungsgemäß beschichtete graue Wirrvlies erwärmt sich auf 52,5°C.
Das graue Wirrvlies gemäß Vergleich erwärmt sich auf 63,5°C.

### Beispiel 5: Beschichtung einer gefärbten Platte aus Epoxidharz

a) Es wird eine homogen grau durchgefärbte Epoxyplatte nach folgender Rezeptur hergestellt:

| | |
|---|---|
| 100,00 g | Laminierharz L 160 Firma Scheufler Stuttgart |
| 25,00 g | Härter H 160 Firma Scheufler Stuttgart |
| 50,00 g | Ferro® PK 0032 Weißpigment Firma Ferro |
| 25,00 g | Ferro® PK 3080 Schwarzpigment Firma Ferro (Teilchengrösse: 0,9 µm) |

b) Es wird eine graue Beschichtung hergestellt aus

| | |
|---|---|
| 80,00 g | Rodia Base® VL 8108 der TFL USA/Canada Inc.. |
| 03,50 g | Tönpaste Schwarz aus: |
| | 20 Gewichtsteilen Paliogen® Schwarz L0086 der BASF, |
| | 80 Gewichtsteilen Butylenglykol, |
| 10,50 g | Ropaque® OP 62 von Rohm & Haas, |
| 00,13 g | QWD® 0108 Magenta der Sun Chemical, |
| 12,00 g | Wasser. |

Die Beschichtung wird mit einem Spiralrakel 3 x 100 µm naß auf die homogen grau gefärbte Epoxidharzplatte aufgetragen.

### Vergleichsbeispiel:

Eine handelsübliche, graue PVC-Platte wird mit einer grauen Standardbeschichtung beschichtet. Die Standardbeschichtung besteht aus einer Acryl-Copolymer Emulsion und einer wässrigen Polyurethandispersion. Zur grauen Einfärbung werden dieser Bindemittelmischung wässrige Pigmentdispersionen aus Titandioxid (Rutil), schwarzem Eisenoxid und eine wässrige Russdispersion beigefügt.

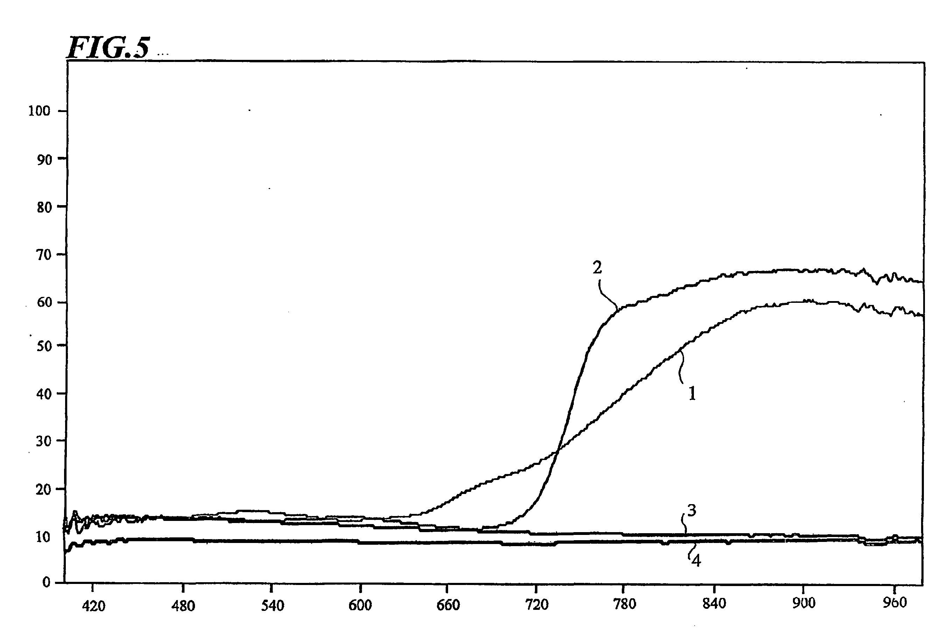

Die spektrale Reflexion der Proben wird im Bereich 400 bis 980 nm vermessen, die Messergebnisse sind in Figur 5 dargestellt.

Die Messergebnisse in Figur 5 zeigen (1) die spektrale Reflexion der erfindungsgemäß zu verwendenden eingefärbten Epoxidharzplatte gemäß Beispiel 5a), (2) die spektrale Reflexion der erfindungsgemäß beschichteten Epoxidharzplatte gemäß Beispiel 5b) und (3) die spektrale Reflexion der handelsüblichen PVC-Platte und (4) die spektrale Reflexion der standardmäßig grau gefärbten PVC-Platte gemäß Vergleichsbeispiel.

Die Proben werden auf eine Styroporplatte geklebt und unter 94000 Lx Sonneneinstrahlung mit einem Strahlungsthermometer vermessen.

Die erfindungsgemäß beschichtete graue Platte erwärmt sich auf 51,5°C.
Das standardmäßige beschichtete Platte gemäß Vergleich erwärmt sich auf 61,5°C.

### Beispiel 6: Beschichtung einer geschäumten Epoxidharzplatte

a) Es wird eine homogen grau durchgefärbte Epoxy-Schaumplatte nach folgender Rezeptur hergestellt:

| | |
|---|---|
| 100,00 g | Laminierharz L 160 Firma Scheufler Stuttgart, |
| 25,00 g | Härter H 160 Firma Scheufler Stuttgart, |
| 7,00 g | Expancel® 461 DE 20 Firma Akzo Nobel, |
| 0,65 g | QWD® 0108 Magenta der Sun Chemical, |
| 5,35 g | Tönpaste Schwarz aus |
| | 20 Gewichtsteilen Paliogen® Schwarz L 0086 BASF |
| | 80 Gewichtsteilen Butylenglykol. |

c) Es wird eine graue Beschichtung hergestellt aus:

| | |
|---|---|
| 80,00 g | Rodia Base® VL 8108 der TFL USA/Canada Inc., |
| 3,50 g | Tönpaste Schwarz aus |
| | 20 Gewichtsteilen Paliogen® Schwarz L0086 der BASF, |
| | 80 Gewichtsteilen Butylenglykol, |
| 10,50 g | Ropaque® OP 62 von Rohm & Haas, |
| 0,13 g | QWD® 0108 Magenta der Sun Chemical, |
| 12,00 g | Wasser. |

Die Beschichtung wird mit einem Spiralrakel 3 x 100 µm naß auf die homogen grau gefärbte Epoxy-Schaumplatte aufgetragen und getrocknet.

### Vergleichsbeispiel

Als Vergleichsbeispiel wurde die handelsübliche PVC-Platte aus dem Vergleichsbeispiel zu Beispiel 5. herangezogen.

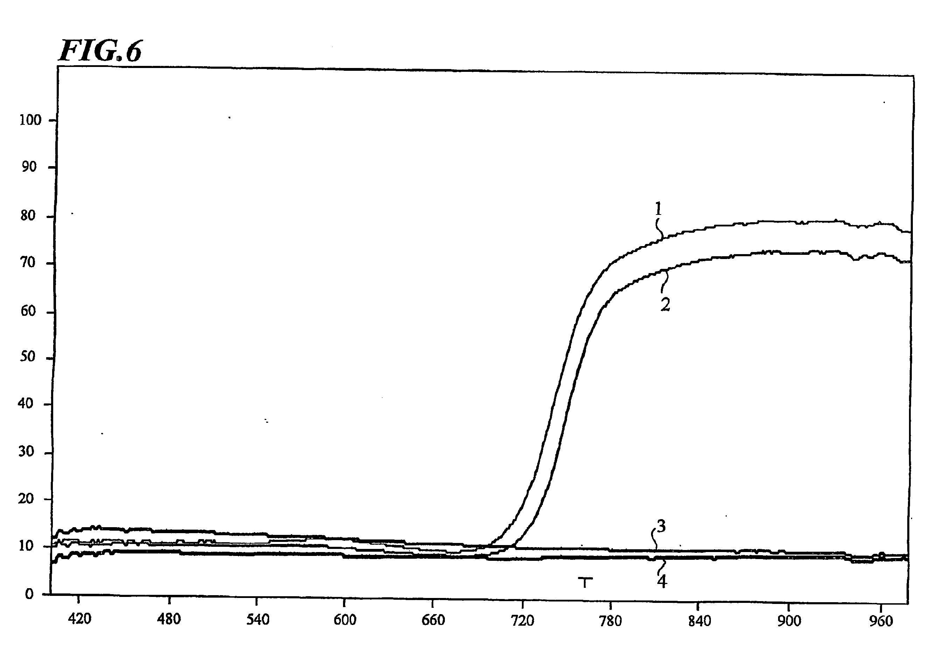

Die spektrale Reflexion der Proben wird im Bereich 400 bis 980 nm vermessen, die Messergebnisse sind in Figur 6 dargestellt.

Die Messergebnisse in Figur 6 zeigen (1) die spektrale Reflexion der erfindungsgemäß zu verwendenden eingefärbten Epoxyplatte gemäß Beispiel 6a), (2) die spektrale Reflexion der erfindungsgemäß beschichteten Epoxyplatte gemäß Beispiel 6b) und (3) die spektrale Reflexion der handelsüblichen PVC-Platte und (4) die spektrale Reflexion der grau beschichteten PVC-Platte gemäß Vergleichsbeispiel zu 5.

Die Proben werden auf eine Styroporplatte geklebt und unter 98000 Lx Sonneneinstrahlung mit einem Strahlungsthermometer vermessen.

Die erfindungsgemäß beschichtete graue Platte erwärmt sich auf 50,5°C.
Die gemäß Vergleichsbeispiel beschichtete Platte erwärmt sich auf 65°C.

### Beispiel 7: Beschichtung eines Leders und Vergleich

a) Ein Leder wird mit folgender Mischung beige eingefärbt:
Acid Dye Mixture (Sella® Fast Beige E) der Firma TFL USA/Canada Inc..

b) Es wird eine beige/gold schimmernde Beschichtung hergestellt aus

| | |
|---|---|
| 80,00 g | Rodia Base® VL 8108 der TFL USA/Canada Inc., |
| 10,00 g | Iriodin 100 Silberperl® Firma Merck, |
| 10,00 g | Ropaque® OP 62 von Rohm & Haas, |
| 0,35 g | QWD® 0108 Magenta der Sun Chemical, |
| 1,00 g | YWD® 1156 Gelb der Sun Chemical, |
| 10,00 g | Wasser. |

Die Beschichtung wird mit einem Spiralrakel 3 x 100 µm naß auf das beige vorgefärbte Leder aufgetragen und getrocknet.

### Vergleichsbeispiel

Ein beige vorgefärbtes Leder wird mit einer beigen Standardbeschichtung beschichtet. Die Standardbeschichtung besteht aus einer Acryl-Copolymer Emulsion und einer wässrigen Polyurethandispersion, die mit handelsüblichen Wachsen, Füllstoffen, Kasein und Öl anwendungsspezifisch eingestellt wird. Zur Einfärbung wurden dieser Bindemittelmischung wässrige Pigmentdispersionen aus Titandioxid (Rutil), braunen und roten Eisenoxiden und eine wässrige Russdispersion beigefügt.

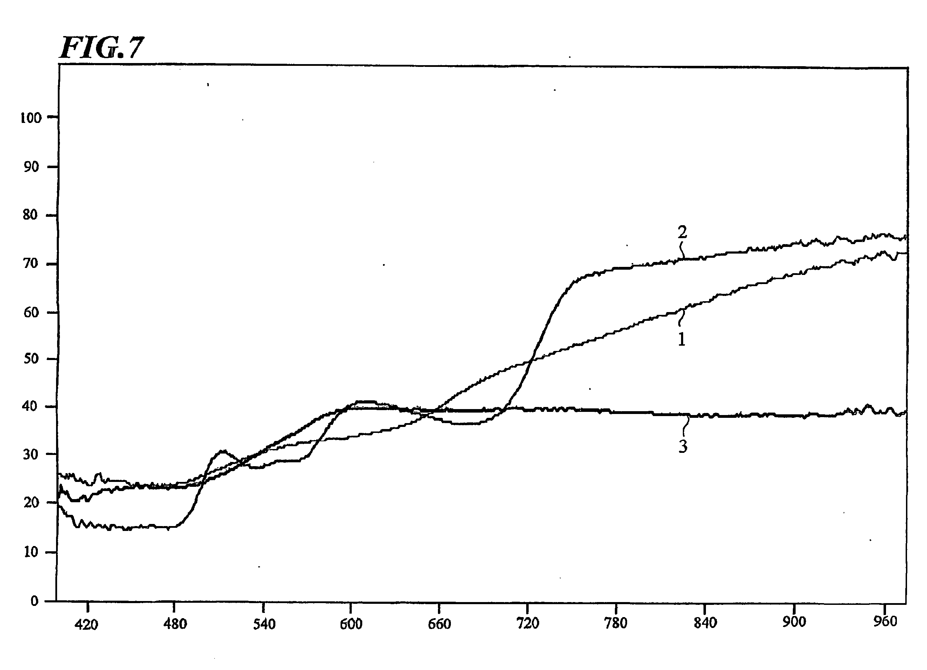

Die spektrale Reflexion der Proben wird im Bereich 400 bis 980 nm vermessen, die Messergebnisse sind in Figur 7 dargestellt.

Die Messergebnisse in Figur 7 zeigen (1) die spektrale Reflexion des erfindungsgemäß zu verwendenden eingefärbten Leders gemäß Beispiel 7a), (2) die spektrale Reflexion des erfindungsgemäß beschichteten Leders gemäß Beispiel 7b) und (3) die spektrale Reflexion des Leders gemäß Vergleichs.

Die Proben werden auf eine Styroporplatte geklebt und unter 98000 Lx Sonneneinstrahlung mit einem Strahlungsthermometer vermessen.

Das erfindungsgemäße beige Leder erwärmt sich auf 45°C. Das beige Leder gemäß Vergleich erwärmt sich auf 53,5°C.

### Beispiel 8: Beschichtung einer Platte aus Epoxidharz

a) Die grau durchgefärbte Epoxyplatte gemäß Beispiel 5a) wird mit einer anderen Beschichtung versehen. Es wird eine graue Beschichtung hergestellt aus:

| | |
|---|---|
| 40,00 g | APU 1014 Bindemittel der Firma Alberdingk, |
| 40,00 g | U 330 Bindemittel der Firma Alberdingk, |
| 3,50 g | Tönpaste Schwarz aus: |
| | 20 Gewichtsteilen Paliogen® Schwarz L0086 der BASF, |
| | 80 Gewichtsteile Butylenglykol, |
| 10,50 g | Ropaque® OP 62 von Rohm & Haas, |
| 00,13 g | QWD 0108 Magenta® der Sun Chemical, |
| 12,00 g | Wasser. |

Die Beschichtung wird mit einem Spiralrakel 3 x 100 µm naß auf die homogen grau gefärbte Epoxyplatte aufgetragen und getrocknet.

Die spektrale Reflexion der so hergestellten Platte, wie auch die solare Erwärmung werden im Vergleich zu der Epoxyplatte mit Standardbeschichtung gemäß Vergleich in Beispiel 5 vermessen. Die Messergebnisse sind die gleichen wie in Beispiel 5 beschrieben.

### Beispiel 9: Beschichtung einer Schaumplatte aus Epoxidharz

a) Die grau durchgefärbte Schaumplatte aus Epoxidharz gemäß Beispiel 6a) wird mit einer anderen Beschichtung versehen. Es wird eine graue Beschichtung hergestellt aus

| | |
|---|---|
| 40,00 g | APU 1014 Bindemittel der Firma Alberdingk, |
| 40,00 g | U 330 Bindemittel der Firma Alberdingk, |
| 3,50 g | Tönpaste Schwarz aus |
| | 20 Gewichtsteilen Paliogen® Schwarz L0086 der BASF, |
| | 80 Gewichtsteilen Butylenglykol, |
| 10,50 g | Ropaque® OP 62 von Rohm & Haas, |
| 0,13 g | QWD 0108 Magenta® der Sun Chemical, |
| 12,00 g | Wasser. |

Die Beschichtung wird mit einem Spiralrakel 3 x 100 µm naß auf die homogen grau gefärbte Schaumplatte aufgetragen und getrocknet.

Die spektrale Reflexion der so hergestellten Platte, wie auch die solare Erwärmung werden im Vergleich zu der Schaumplatte mit Standardbeschichtung gemäß Vergleich in Beispiel 6 vermessen. Man erhält die gleichen Messergebnisse wie in Beispiel 6 beschrieben.

### Beispiel 10: Beschichtung einer geschäumten Platte aus Epoxidharz und Vergleich

a) Die grau durchgefärbte Epoxy-Schaumplatte aus Beispiel 6a) wird mit einer anderen Beschichtung versehen. Es wird eine graue Beschichtung hergestellt aus:

| | |
|---|---|
| 50,00 g | Mowilith® DM 611 Firma Hoechst, |
| 100,00 g | Wasser plus 2% Tylose® MH 2000 Firma Clariant, |
| 10,00 g | Ferro® PK 3080 Schwarzpigment Firma Ferro, |
| 2,00 g | Glasbubbles S60 Firma 3M. |

Die Beschichtung wird mit einem Spiralrakel 2 x 200 µm nass auf die Epoxy-Schaumplatte aufgetragen und im Ofen getrocknet.

### Vergleichsbeispiel

Eine handelsübliche, graue PVC-Platte wird mit einer grauen Standardbeschichtung beschichtet. Die Standardbeschichtung besteht aus einer Acryl-Copolymer Emulsion und einer wässrigen Polyurethandispersion. Zur grauen Einfärbung werden dieser Bindemittelmischung wässrige Pigmentdispersionen aus Titandioxid (Rutil), schwarzem Eisenoxid und eine wässrige Russdispersion beigefügt.

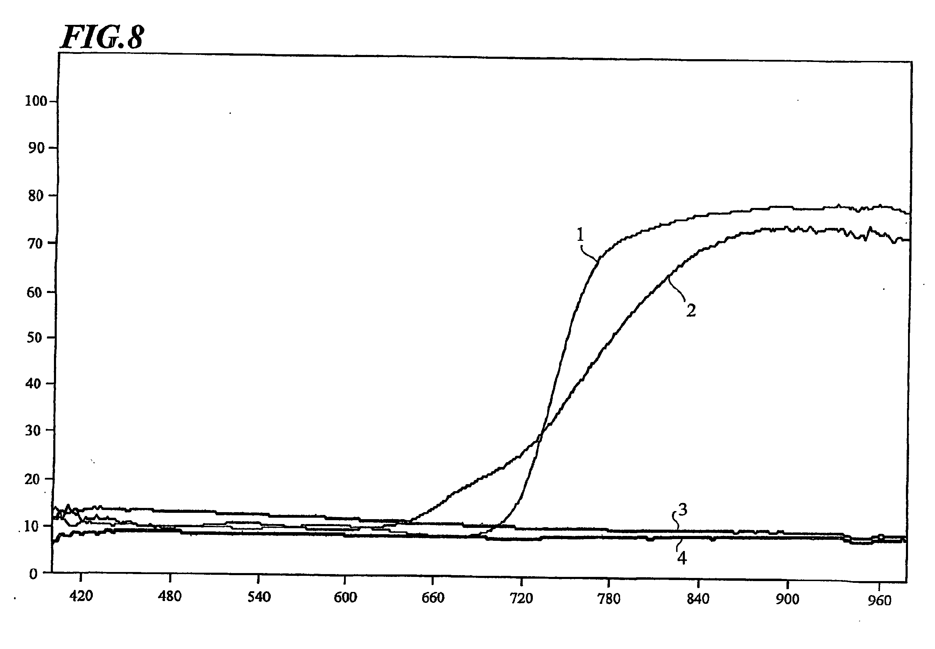

Die spektrale Reflexion der Proben werden im Bereich 400 bis 980 nm vermessen, die Messergebnisse sind in Figur 8 dargestellt.

Die Messergebnisse in Figur 8 zeigen (1) die spektrale Reflexion der erfindungsgemäß zu verwendenden eingefärbten Platte aus Epoxidharz gemäß Beispiel 6a), (2) die spektrale Reflexion der erfindungsgemäß beschichteten Epoxyplatte gemäß Beispiel 10a), (3) die spektrale Reflexion der handelsüblichen, grauen PVC-Platte und (4) die spektrale Reflexion der beschichteten PVC-Platte gemäß Vergleich.

### Beispiel 11: Beschichtung eines Leders und Vergleichsbeispiel

a) Ein Leder wird mit folgender Mischung schwarz eingefärbt:
Acid Black Mixture: (Sella Fast Black® HS-02 + Sella Fluid Black® M-M der Firma TFL USA/Canada Inc.).

b) Auf dem gemäß a) gefärbten Leder wird eine schwarze Beschichtung hergestellt aus:

| | |
|---|---|
| 30,00 g | APU 1014 Alberdingk (Bindemittel) |
| 30,00 g | U 330 Alberdingk (Bindemittel) |
| 20,00 g | Wasser mit 2% Tylose MH 2000 Clariant |
| 00,20 g | Entschäumer Byk 024 |
| 00,30 g | Pigmentverteiler N BASF |
| 20,00 g | Ferro® PK 3080 Schwarzpigment der Fa. Ferro |

Die Beschichtung wird mit einem Spiralrakel 3 x 100 µm naß auf das vorgefärbte Leder aufgetragen und anschliessend getrocknet.

### Vergleichsbeispiel:

Als Vergleichsbeispiel wurde das standardmäßig vorgefärbte und beschichtete Leder aus Beispiel 1. herangezogen.

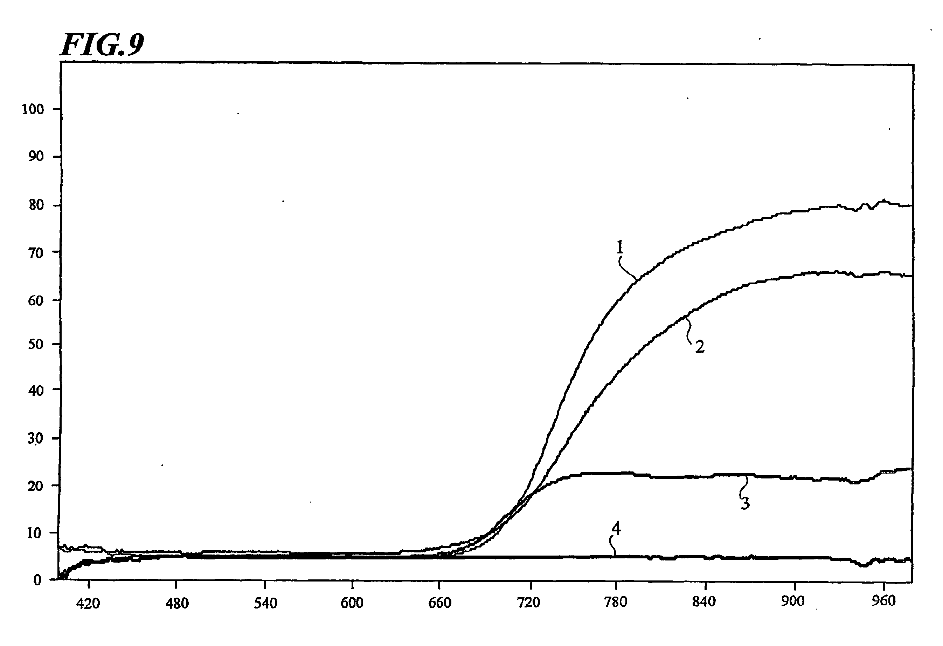

Die spektrale Reflexion der Proben wird im Bereich 400 bis 980 nm vermessen; die Messergebnisse sind in Figur 9 dargestellt.

Die Messergebnisse in Figur 9 zeigen (1) die spektrale Reflexion des erfindungsgemäß zu verwendenden eingefärbten Leders gemäß Beispiel 11a), (2) die spektrale Reflexion des erfindungsgemäß beschichteten Leders gemäß Beispiel 11b) und (3) die spektrale Reflexion des vorgefärbten Leders gemäß Vergleichsbeispiel und (4) die spektrale Reflexion des beschichteten Leders gemäß Vergleichsbeispiel.

Die Proben werden auf eine Styroporplatte geklebt und unter 98000 Lx Sonneneinstrahlung mit einem Strahlungsthermometer vermessen.

Das erfindungsgemäß beschichtete schwarze Leder erwärmt sich auf 58°C. Das schwarze Leder gemäß Vergleichsbeispiel erwärmt sich auf 67°C.

### Beispiel 12: Beschichtung einer geschäumten Epoxidharzplatte

a) Es wird eine homogen grau durchgefärbte Epoxy-Schaumplatte nach folgender Rezeptur hergestellt:

| | |
|---|---|
| 100,00 g | Laminierharz L 160 Firma Scheufler Stuttgart, |
| 25,00 g | Härter H 160 Firma Scheufler Stuttgart, |
| 3,00 g | Expancel® 461 DE 20 Firma Akzo Nobel, |
| 0,65 g | QWD® 0108 Magenta der Sun Chemical, |
| 5,35 g | Tönpaste Schwarz aus |
| | 20 Gewichtsteilen Paliogen® Schwarz L 0086 BASF |
| | 80 Gewichtsteilen Butylenglykol. |
| 20,00 g | Zirkonsilikat 2 µm der Fa. Wema Nürnberg |

b) Es wird eine dunkelgrüne Beschichtung hergestellt aus:

| | |
|---|---|
| 30,00 g | APU1014 Bindemittel der Fa. Alberdingk |
| 30,00 g | U330 Bindemittel der Fa. Alberdingk |
| 00,20 g | Byk 024 Entschäumer |
| 00,30 g | Pigmentverteiler N BASF |
| 30,00 g | Ferro® PK 4047 Grünpigment Fa. Ferro (Teilchengrösse: 1,5 µm) |
| 02,00 g | Aerosil 380 Fa. Degussa |
| 20,00 g | Zirkonsilikat 2 µm Fa. Wema |

Die Beschichtung wird mit einem Spiralrakel 3 x 100 µm naß auf die homogen grau gefärbte Epoxy-Schaumplatte aufgetragen und getrocknet.

### Vergleichsbeispiel

Eine handelsübliche, graue PVC-Platte wird mit einer dunkelgrünen Standardbeschichtung beschichtet. Die Standardbeschichtung besteht aus einer Acryl-Copolymer Emulsion und einer wässrigen Polyurethandispersion. Zur dunkelgrünen Einfärbung werden dieser Bindemittelmischung wässrige Pigmentdispersionen aus Titandioxid (Hostatint Fa. Hoechst), schwarzem Eisenoxid und eine grüne Pigmentdispersion (Hostatint Grün GG30) beigefügt.

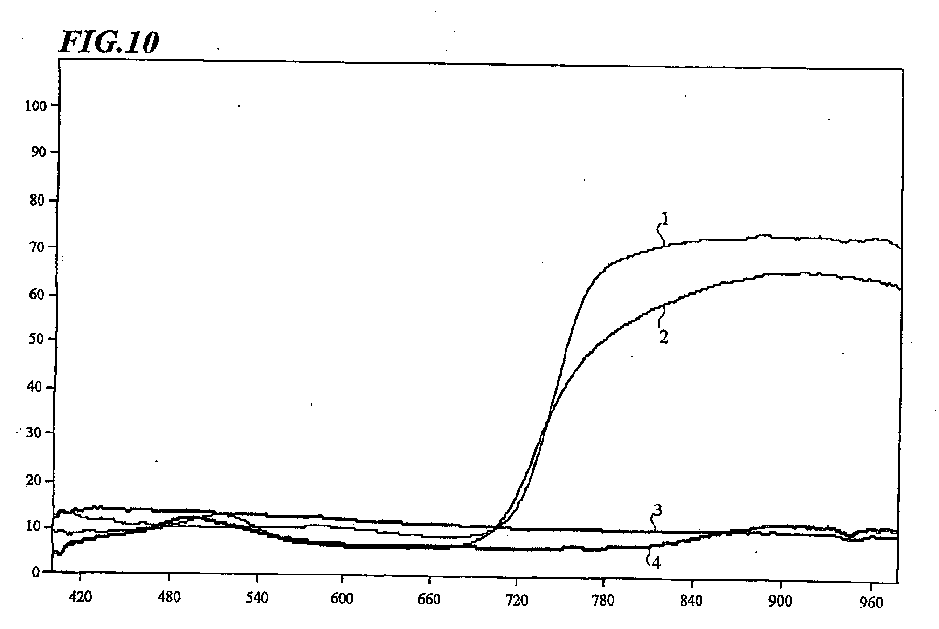

Die spektrale Reflexion der Proben wird im Bereich 400 bis 980 nm vermessen, die Messergebnisse sind in Figur 10 dargestellt.

Die Messergebnisse in Figur 10 zeigen (1) die spektrale Reflexion der erfindungsgemäß zu verwendenden eingefärbten Epoxyplatte gemäß Beispiel 12a), (2) die spektrale Reflexion der erfindungsgemäß beschichteten Epoxyplatte gemäß Beispiel 12b), (3) die spektrale Reflexion der grauen PVC-Platte und (4) die spektrale Reflexion der grün gefärbten PVC - Platte gemäß Vergleichsbeispiel.

Die Proben werden auf eine Styroporplatte geklebt und unter 98000 Lx Sonneneinstrahlung mit einem Strahlungsthermometer vermessen.

Die erfindungsgemäß beschichtete dunkelgrüne Platte erwärmt sich auf 53,5°C. Die gemäß Vergleichsbeispiel dunkelgrün beschichtete PVC-Platte erwärmt sich auf 64°C.

### Beispiel 13: Herstellung eines Substrates und Beschichtung

a) Es wird ein dunkelgraues Substrat nach folgender Rezeptur hergestellt:

| | |
|---|---|
| 50,00 g | Wasser mit 2% Tylose MH2000 Clariant |
| 30,00 g | Mowilith® DM611 Bindemittel Fa. Hoechst |
| 00,20 g | Byk 024 Entschäumer |
| 00,40 g | Pigmentverteiler N BASF |
| 80,00 g | Zirkonsilikat 2 µm der Fa. Wema Nürnberg |
| 40,00 g | Aluminiumoxid, kalziniert Fa. Wema |
| 30,00 g | Ropaque® OP96 Rohm und Haas |
| 26,00 g | Tönpaste Schwarz aus |
| | 40 g Wasser |
| | 40 g Butylglykol |
| | 20 g Paliogen® Schwarz L0086 BASF |
| 02,10 g | Magenta QWD® 0108 Sun Chemicals |

Die Mischung wird dispergiert, mit einem Spiralrakel 1 X 100 µm nass auf ein laborübliches Lack-Prüfblech aufgetragen und im Ofen getrocknet.
b) Es wird eine antrazith-schwarze Beschichtung hergestellt aus:

| | |
|---|---|
| 45,00 g | APU1014 Bindemittel der Fa. Alberdingk |
| 45,00 g | U330 Bindemittel der Fa. Alberdingk |
| 00,20 g | Byk 024 Entschäumer |
| 00,40 g | Pigmentverteiler N BASF |
| 20,00 g | Zirkonsilikat 1 µm Fa. Wema |
| 70,00 g | Luxsil Mikrohohlkugeln Presperse Inc. |
| 20,00 g | Tönpaste Schwarz aus |
| | 40 g Wasser |
| | 40 g Butylglykol |
| | 20 g Paliogen® Schwarz L0086 BASF |
| 01,70 g | Magenta QWD® 0108 Sun Chemicals |
| 10,00 g | Wasser |

Die Beschichtung wird mit einem Spiralrakel 1 x 100 µm naß auf das gemäß 13. a) hergestellte Substrat aufgetragen und getrocknet.

### Vergleichsbeispiel

Eine handelsüblicher antrazith-schwarzer Lack wird mit einem Spiralrakel 2 X 100 µm nass auf ein laborübliches Lack-Prüfblech aufgetragen und im Ofen getrocknet

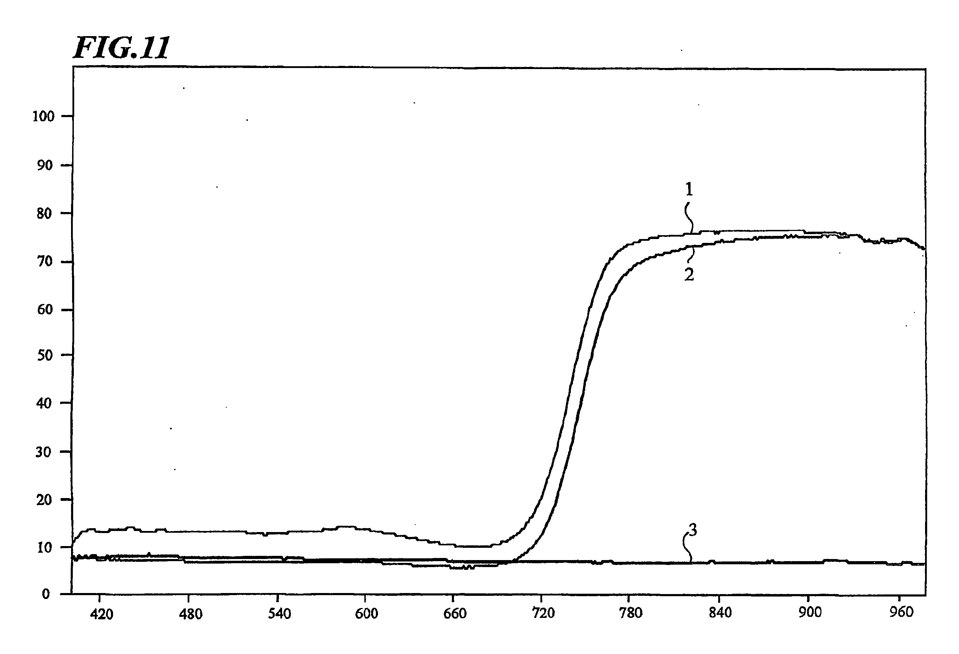

Die spektrale Reflexion der Proben wird im Bereich 400 bis 980 nm vermessen, die Messergebnisse sind in Figur 11 dargestellt.

Die Messergebnisse in Figur 11 zeigen (1) die spektrale Reflexion des erfindungsgemäß zu verwendenden eingefärbten Substrates gemäß Beispiel 13a), (2) die spektrale Reflexion des erfindungsgemäß antrazith-schwarzer beschichteten Substrates gemäß Beispiel 13b) und (3) die spektrale Reflexion des handelsüblichen antrazith-schwarzen Lackes gemäß Vergleichsbeispiel.

## Patentansprüche

1. Flächiges Element mit dunkler Oberfläche und verminderter solarer Absorption, **gekennzeichnet durch**
a) ein Substrat, dessen Reflexion im Bereich des sichtbaren Lichtes von 380 bis 720 nm kleiner 50% und im Bereich des nahen Infrarot von 720 bis 1500 nm größer als 60% ist, und
b) wenigstens einer Beschichtung des Substrats bestehend aus einem Bindemittel, das im Spektralbereich von 380 bis 1500 nm eine Transparenz größer als 70% besitzt, und ersten Pigmenten, die im Bereich des sichtbaren Lichtes von 380 bis 720 nm der Beschichtung eine Reflexion von kleiner als 50% und im Spektralbereich des nahen Infrarot von 720 nm bis 1500 nm der Beschichtung eine Transparenz von größer als 50% verleihen, und/oder zweiten Pigmenten, die im Bereich des sichtbaren Lichtes von 380 bis 720 nm der Beschichtung eine Reflexion kleiner als 50% und im Spektralbereich des nahen Infrarot von 720 nm bis 1500 nm der Beschichtung eine Reflexion größer 40% verleihen.

2. Flächiges Element mit dunkler Oberfläche und verminderter solarer Absorption nach Anspruch 1, **dadurch gekennzeichnet, dass** es sich bei dem Substrat um ein faseriges Material aus Kunststoff, ausgewählt aus Kunstleder und Vliesstoffen oder Geweben aus Polyethylen, Polypropylen, Polyester, Nylon und Celluloseacetat, oder aus einem natürlichen Material, ausgewählt aus Leder und Vliesstoffen oder Geweben aus Sisal, Hanf, Zellstoff, Baumwolle oder Seide.

3. Flächiges Element mit dunkler Oberfläche und verminderter solarer Absorption nach Anspruch 1, **dadurch gekennzeichnet, dass** es sich bei dem Substrat um ein reaktiv und/oder mechanisch geschäumtes Material handelt, das ausgewählt ist aus der Gruppe der Kunststoffe, ausgewählt aus Polyethylen, Polypropylen, Polyester, Nylon, ABS, Epoxy, Polyurethan und PVC.

4. Flächiges Element mit dunkler Oberfläche und verminderter solarer Absorption nach Anspruch 1, **dadurch gekennzeichnet, dass** es sich bei dem Substrat um ein Material handelt, das ausgewählt ist aus der Gruppe der Kunststoffe, ausgewählt aus Polyethylen, Polypropylen, Polyester, Nylon, ABS, Epoxy, Polyurethan und PVC, und das mit Füllstoffen zu 40 bis 80 Volumenprozenten gefüllt ist, die im Wellenlängenbereich von 380 bis 1500 nm eine Transparenz größer 70% haben und deren Teilchengröße so gewählt ist, dass sie im sichtbaren Bereich eine geringe Rückstreuung haben.

5. Flächiges Element mit dunkler Oberfläche und verminderter solarer Absorption nach Anspruch 1, **dadurch gekennzeichnet, dass** das Substrat nach Trocknung aus einem zunächst flüssigen Bindemittel gebildet ist, das mit Füllstoffen zu 40 bis 80 Volumenprozenten gefüllt ist, die im Wellenlängenbereich von 380 bis 1500 nm eine Transparenz größer 70% haben und deren Teilchengröße so gewählt ist, dass sie im sichtbaren Bereich eine geringe Rückstreuung haben.

6. Flächiges Element mit dunkler Oberfläche und verminderter solarer Absorption nach einem der vorhergehenden Ansprüche, **dadurch gekennzeichnet, dass** die Reflexion des Substrates im Spektralbereich des sichtbaren Lichtes von 380 bis 720 nm von kleiner 50 % durch Einfärbung mit löslichen Farbstoffen oder mit Pigmenten bedingt ist.

7. Flächiges Element mit dunkler Oberfläche und verminderter solarer Absorption nach Anspruch 6, **dadurch gekennzeichnet, dass** die löslichen Farbstoffe wasserlösliche Farbstoffe, ausgewählt aus sauren Farbstoffen, substantiven Farbstoffen, basischen Farbstoffen, Entwicklungsfarbstoffen, Schwefelfarbstoffen und Anillinfarbstoffen, oder Farbstoffe, die mit Lösemitteln gelöst werden, ausgewählt aus Zaponfarbstoffen sind.

8. Flächiges Element mit dunkler Oberfläche und verminderter solarer Absorption nach einem der vorhergehenden Ansprüche, **dadurch gekennzeichnet, dass** die ersten Pigmente, die im Bereich des sichtbaren Lichtes von 380 bis 720 nm der Beschichtung eine geringe Reflexion kleiner als 50% verleihen und im Bereich des nahen Infrarot von 720 bis 1500 nm eine hohe Transparenz größer als 50% haben, ausgewählt sind aus der Gruppe der organischen Pigmente, ausgewählt aus der Gruppe der Azopigmente, ausgewählt aus Monoazo-, Disazo-, β-Naphtol-, Naphtol AS-, verlackte Azo-, Benzimidazolon-, Disazokondensations-, Metallkomplex-, Isoindolinon und Isoindolin-Pigmenten, oder ausgewählt aus der Gruppe der polycyclischen Pigmente, ausgewählt aus Phthalocyanin-, Chinacridon-, Perylen- und Perinon-, Thioindigo-, Anthrachinon-, Anthrapyrimidin-, Flavanthron-, Pyranthron-, Anthanthron-, Dioxazin-, Triarylcarbonium-, Chino-phthalon-, Diketo-pyrrolo-pyrrol-Pigmente.

9. Flächiges Element mit dunkler Oberfläche und verminderter solarer Absorption nach einem der vorhergehenden Ansprüche, **dadurch gekennzeichnet, dass** die zweiten Pigmente, die im Bereich des sichtbaren Lichtes von 380 bis 720 nm der Beschichtung eine geringe Reflexion kleiner als 50% verleihen und im nahen Infrarot von 720 bis 1500 nm eine Reflexion größer 40% haben, ausgewählt sind aus der Gruppe der anorganischen Pigmente, ausgewählt aus der Gruppe der Metalloxide und -Hydroxide, aus Cadmium-, Wismut-, Chrom-, Ultramarinpigmenten, ausgewählt aus der Gruppe der beschichteten, plättchenförmigen Glimmerpigmente, ausgewählt insbesondere aus der Gruppe der Rutil- und Spinellmischphasenpigmente.

10. Flächiges Element mit dunkler Oberfläche und verminderter solarer Absorption nach einem der Ansprüche 4 bis 9, **dadurch gekennzeichnet, dass** die Füllstoffe ausgewählt sind aus der Gruppe der abbaubaren Mineralien, ausgewählt aus Metalloxiden, ausgewählt aus Aluminiumoxid, Magnesiumoxid, Quarz, ausgewählt aus Mischungen von Metalloxiden, ausgewählt aus Zirkonsilikat, Tonerde, ausgewählt aus Metallcarbonaten, ausgewählt aus Calciumcarbonat, ausgewählt aus Metallsulfaten, ausgewählt aus Bariumsulfat, deren Teilchengröße durch vermahlen im Mittel auf 1 bis 3 µm eingestellt ist.

11. Flächiges Element mit dunkler Oberfläche und verminderter solarer Absorption nach einem der vorhergehenden Ansprüche, **dadurch gekennzeichnet, dass** das Bindemittel ausgewählt ist
a) aus der Gruppe der lösemittelhaltigen Bindemittel, umfassend Acrylate, Methacrylate, Styrol-Acrylate, Styrol-Methacrylate, ausgewählt aus substituierten Polyolefinen, ausgewählt aus Polystyrol und StyrolCopolymere, Alkydharze, ausgewählt aus gesättigten und ungesättigten Polyestern oder Polyamiden, Polyimiden, Polyurethanen, Polyethern, Epoxidharzen, Silikonen, chlorsulfoniertem Polyäthylen, fluorierten Polymeren ausgewählt aus fluorierten Acryl-Copolymeren oder Fluorsilikonen.
b) ausgewählt aus der Gruppe der wässrigen Bindemittel, umfassend die Gruppe der wasserlöslichen Binder aus Alkyden, Polyester, Polyacrylate, Epoxide und Epoxidester, aus der Gruppe der wässrigen Dispersionen und Emulsionen, die umfasst, Dispersionen und Emulsionen auf der Basis von, Acrylat, Methacrylat, Styrol-Acrylat, Polyäthylen, Polyäthylen-Oxidat, Ethylen-Acrylsäure-Copolymere, Methacrylat, Vinylpyrrolidon-VinylacetatCopolymere, Polyvinylpyrrolidon, Polyisopropylacrylat, Polyurethane, Wachsdispersionen auf der Basis von Polyethylen, Polypropylen, Teflon^{®}, synthetische Wachse, fluorierte Polymere, fluoriertes Acryl-Copolymer in wässriger Lösung, Fluorsilikone.

12. Flächiges Element mit dunkler Oberfläche und verminderter solarer Absorption nach einem der vorhergehenden Ansprüche, **dadurch gekennzeichnet, dass** die Teilchengröße der ersten Pigmente kleiner 0.9 µm ist und die Teilchengröße der zweiten Teilchen größer oder gleich 0.9 µm ist.

13. Flächiges Element mit dunkler Oberfläche und verminderter solarer Absorption nach einem der vorhergehenden Ansprüche, **dadurch gekennzeichnet, dass** die Reflexion des Substrates im Spektralbereich 720 bis 1500 nm größer 70% ist.

14. Flächiges Element mit dunkler Oberfläche und verminderter solarer Absorption einem der vorhergehenden Ansprüche, **dadurch gekennzeichnet, dass** die Reflexion des Substrates und/oder der Beschichtung im Spektralbereich des sichtbaren Lichtes von 380 bis 720 nm kleiner 40% beträgt.

15. Flächiges Element mit dunkler Oberfläche und verminderter solarer Absorption nach einem der vorhergehenden Ansprüche, **dadurch gekennzeichnet, dass** die ersten und/oder zweiten Pigmente im Bereich des sichtbaren Lichtes von 380 bis 720 nm der Beschichtung eine geringe Reflexion kleiner als 40% verleihen.

16. Flächiges Element mit dunkler Oberfläche und verminderter.solarer Absorption nach einem der Ansprüche 3 bis 15, **dadurch gekennzeichnet, dass** der mechanische Schaum durch Einlagerung von Mikrohohlkugeln aus Glas oder Kunststoff gebildet ist.

17. Flächiges Element mit dunkler Oberfläche und verminderter solarer Absorption nach einem der vorhergehenden Ansprüche, **dadurch gekennzeichnet, dass** die Schichtdicken des Substrates im Bereich von 10 µm bis 8 mm liegen, insbesondere im Bereich von 20 µm bis 6 mm liegen.

18. Flächiges Element mit dunkler Oberfläche und verminderter solarer Absorption nach einem der vorhergehenden Ansprüche, **dadurch gekennzeichnet, dass** die Schichtdicken der Beschichtung im Bereich von 10 µm bis 500 µm liegen, insbesondere im Bereich von 20 µm bis 300 µm liegen.

19. Verfahren zur Herstellung des flächigen Elements mit dunkler Oberfläche und verminderter solarer Absorption gemäß Anspruch 1, bei dem man auf wenigstens einer Oberfläche eines Substrates, dessen Reflexion im Bereich des sichtbaren Lichtes von 380 bis 720 nm kleiner 50% und im Bereich des nahen Infrarot von 720 bis 1500 nm größer als 60% ist, ein flüssiges und im wesentlichen gleich gefärbtes Beschichtungsmittel aufträgt und trocknet, das im Spektralbereich von 380 bis 1500 nm eine Transparenz größer 70% hat, das gefüllt ist mit ersten Pigmenten, die im Bereich des sichtbaren Lichtes von 380 bis 720 nm der Beschichtung eine geringe Reflexion kleiner als 50% verleihen und im Spektralbereich des nahen Infrarot von 720 nm bis 1500 nm eine Transparenz größer 50% aufweisen und/oder zweiten Pigmenten, die im Bereich des sichtbaren Lichtes von 380 bis 720 nm der Beschichtung eine geringe Reflexion kleiner als 50% verleihen und im Spektralbereich des nahen Infrarot von 720 nm bis 1500 nm eine Reflexion größer 40% aufweisen, wobei das Beschichtungsmittel als eine Schicht oder in mehreren dünnen Schichten auf das Substrat aufgetragen ist.

20. Verwendung eines flächigen Elements mit dunkler Oberfläche und verminderter solarer Absorption bestehend aus einem dunklen Substrat mit einer im wesentlichen gleich gefärbten Beschichtung, wie in Anspruch 1 definiert, zur Verminderung der Erwärmung üblicherweise dunkel gefärbter Oberflächen.

## Claims

1. Web element having a dark surface and reduced solar absorption, **characterised by**:
a) a substrate whose reflection in the range of visible light from 380 to 720 nm is less than 50 % and in the range of the near infrared from 720 to 1500 nm is greater than 60 %; and
b) at least one coating of the substrate consisting of a binder, which in the spectral range from 380 to 1500 nm has a transparency greater than 70 %, and first pigments, which in the range of visible light from 380 to 720 nm lend the coating a reflection of less than 50 % and in the spectral range of the near infrared from 720 nm to 1500 nm lend the coating a transparency of greater than 50 %, and/or second pigments, which in the range of visible light from 380 to 720 nm lend the coating a reflection of less than 50 % and in the spectral range of the near infrared from 720 nm to 1500 nm lend the coating a reflection of greater than 40 %.

2. Web element having a dark surface and reduced solar absorption according to claim 1, **characterised in that** the substrate is a fibrous material composed of synthetic material selected from synthetic leather and non-woven fabrics or woven fabrics composed of polyethylene, polypropylene, polyester, nylon and cellulose acetate or composed of a natural material selected from leather and non-woven fabrics or woven fabrics composed of sisal, hemp, cellulose, cotton or silk.

3. Web element having a dark surface and reduced solar absorption according to claim 1, **characterised in that** the substrate is a reactively and/or mechanically expanded material which is selected from the group of synthetic materials selected from polyethylene, polypropylene, polyester, nylon, ABS, epoxy, polyurethane and PVC.

4. Web element having a dark surface and reduced solar absorption according to claim 1, **characterised in that** the substrate is a material which is selected from the group of synthetic materials selected from polyethylene, polypropylene, polyester, nylon, ABS, epoxy, polyurethane and PVC and is filled to 40 to 80 per cent by volume with fillers which in the wavelength range from 380 to 1500 nm have a transparency greater than 70 % and whose particle size is selected so that they have low backscattering in the visible range.

5. Web element having a dark surface and reduced solar absorption according to claim 1, **characterised in that** the substrate after drying is formed of an initially liquid binder which is filled to 40 to 80 per cent by volume with fillers which in the wavelength range from 380 to 1500 nm have a transparency greater than 70 % and whose particle size is selected so that they have low backscattering in the visible range.

6. Web element having a dark surface and reduced solar absorption according to one of the preceding claims, **characterised in that** the reflection of the substrate in the spectral range of visible light from 380 to 720 nm of less than 50 % is brought about by colouring with soluble dyes or with pigments.

7. Web element having a dark surface and reduced solar absorption according to claim 6, **characterised in that** the soluble dyes are water-soluble dyes selected from acidic dyes, substantive dyes, basic dyes, development dyes, sulphur dyes and aniline dyes or dyes dissolved by means of solvents selected from zapon dyes.

8. Web element having a dark surface and reduced solar absorption according to one of the preceding claims, **characterised in that** the first pigments, which in the range of visible light from 380 to 720 nm lend the coating a low reflection of less than 50 % and in the range of the near infrared from 720 nm to 1500 nm have a high transparency of greater than 50 %, are selected from the group of organic pigments selected from the group of azo pigments selected from monoazo, diazo, β-naphthol, naphthol AS, laked azo, benzimidazolone, diazo condensation, metal complex, isoindolinone and isoindoline pigments or selected from the group of polycyclic pigments selected from phthalocyanine, quinacridone, perylene and perinone, thioindigo, anthraquinone, anthrapyrimidine, flavanthrone, pyranthrone, anthanthrone, dioxazine, triarylcarbonium, quinophthalone, diketo-pyrrolopyrrole pigments.

9. Web element having a dark surface and reduced solar absorption according to one of the preceding claims, **characterised in that** the second pigments, which in the range of visible light from 380 to 720 nm lend the coating a low reflection of less than 50 % and in the near infrared from 720 nm to 1500 nm have a reflection of greater than 40 %, are selected from the group of inorganic pigments selected from the group of metal oxides and hydroxides, from cadmium, bismuth, chromium and ultramarine pigments, selected from the group of coated, lamellar micaceous pigments, selected in particular from the group of rutile and spinel mixed-phase pigments.

10. Web element having a dark surface and reduced solar absorption according to one of claims 4 to 9, **characterised in that** the fillers are selected from the group of degradable minerals selected from metal oxides selected from aluminium oxide, magnesium oxide, quartz, selected from mixtures of metal oxides, selected from zirconium silicate, argillaceous earth, selected from metal carbonates, selected from calcium carbonate, selected from metal sulphates, selected from barium sulphate, whose particle size is adjusted by grinding to an average of 1 to 3 µm.

11. Web element having a dark surface and reduced solar absorption according to one of the preceding claims, **characterised in that** the binder is selected:
a) from the group of solvent-containing binders comprising acrylates, methacrylates, styrene-acrylates, styrene-methacrylates, selected from substituted polyolefins, selected from polystyrene and styrene copolymers, alkyd resins, selected from saturated and unsaturated polyesters or polyamides, polyimides, polyurethanes, polyethers, epoxide resins, silicones, chlorosulfonated polyethylene, fluorinated polymers selected from fluorinated acrylic copolymers or fluorosilicones;
b) selected from the group of aqueous binders comprising the group of water-soluble binders composed of alkyds, polyesters, polyacrylates, epoxides and epoxide esters, from the group of aqueous dispersions and emulsions comprising dispersions and emulsions based on acrylate, methacrylate, styrene-acrylate, polyethylene, polyethylene oxidation product, ethylene-acrylic acid copolymers, methacrylate, vinylpyrrolidone-vinyl acetate copolymers, poly(vinylpyrrolidone), poly(isopropyl acrylate), polyurethanes, wax dispersions based on polyethylene, polypropylene, Teflono^{®}, synthetic waxes, fluorinated polymers, fluorinated acrylic copolymers in aqueous solution, fluorosilicones.

12. Web element having a dark surface and reduced solar absorption according to one of the preceding claims, **characterised in that** the particle size of the first pigments is less than 0.9 µm and the particle size of the second particles is greater than or equal to 0.9 µm.

13. Web element having a dark surface and reduced solar absorption according to one of the preceding claims, **characterised in that** the reflection of the substrate in the spectral range of 720 to 1500 nm is greater than 70 %.

14. Web element having a dark surface and reduced solar absorption according to one of the preceding claims, **characterised in that** the reflection of the substrate and/or the coating in the spectral range of visible light from 380 to 720 nm is less than 40 %.

15. Web element having a dark surface and reduced solar absorption according to one of the preceding claims, **characterised in that** in the range of visible light from 380 to 720 nm the first and/or second pigments lend the coating a low reflection of less than 40 %.

16. Web element having a dark surface and reduced solar absorption according to one of claims 3 to 15, **characterised in that** the mechanical foam is formed by incorporating hollow microspheres made of glass or plastic.

17. Web element having a dark surface and reduced solar absorption according to one of the preceding claims, **characterised in that** the film thicknesses of the substrate are in the range from 10 µm to 8 mm, in particular in the range from 20 µm to 6 mm.

18. Web element having a dark surface and reduced solar absorption according to one of the preceding claims, **characterised in that** the film thicknesses of the coating are in the range from 10 µm to 500 µm, in particular in the range from 20 µm to 300 µm.

19. Method for producing the web element having a dark surface and reduced solar absorption according to claim 1 in which on at least one surface of a substrate whose reflection in the range of visible light from 380 to 720 nm is less than 50 % and in the range of the near infrared from 720 to 1500 nm is greater than 60 % a liquid and substantially uniformly coloured coating agent is applied and dried, which agent in the spectral range from 380 to 1500 nm has a transparency greater than 70 %, is filled with first pigments which in the range of visible light from 380 to 720 nm lend the coating a low reflection of less than 50 % and in the spectral range of the near infrared from 720 nm to 1500 nm have a transparency of greater than 50 % and/or second pigments which in the range of visible light from 380 to 720 nm lend the coating a low reflection of less than 50 % and in the spectral region of the near infrared from 720 nm to 1500 nm have a reflection of greater than 40 %, wherein the coating agent is applied to the substrate as a layer or in a plurality of thin films.

20. Use of a web element having a dark surface and reduced solar absorption consisting of a dark substrate having a substantially uniformly coloured coating, as defined in claim 1, for reducing the heating of usually dark coloured surfaces.

## Revendications

1. Elément plat à surface sombre et à absorption solaire réduite, **caractérisé par**
a) un substrat, dont la réflexion dans la plage de la lumière visible, de 380 à 720 nm, est inférieure à 50 % et, dans la plage de l'infrarouge proche, de 720 à 1500 nm, est supérieure à 60 %, et
b) au moins un revêtement du substrat, formé d'un liant, ayant dans la plage spectrale de 380 à 1500 nm une transparence supérieure à 70 %, et de premiers pigments, conférant, dans la plage de la lumière visible, de 380 à 720 nm, du revêtement, une réflexion inférieure à 50 % et, dans la plage spectrale de l'infrarouge proche, de 720 à 1500 nm du revêtement, une transparence supérieure à 50 %, et/ou des deuxièmes pigments, conférant dans la plage de la lumière visible de 380 à 720 nm du revêtement, une réflexion inférieure à 50 % et, dans la plage spectrale de l'infrarouge proche, de 720 à 1500 nm du revêtement, une réflexion supérieure à 40 %.

2. Elément plat à surface sombre et à absorption solaire réduite selon la revendication 1, **caractérisé en ce qu'**il s'agit, concernant le substrat, d'un matériau fibreux à base de matière synthétique, sélectionné parmi le cuir synthétique et les tissus non tissés ou des tissus tissés en polyéthylène, polypropylène, polyester, Nylon et acétate de cellulose, ou d'un matériau naturel sélectionné parmi le cuir et les tissus non tissés ou les textiles à base de sisal, de chanvre, de cellulose, de coton ou de soie.

3. Elément plat à surface sombre et à absorption solaire réduite selon la revendication 1, **caractérise en ce que**, concernant le substrat, il s'agit d'un matériau rendu alvéolaire par voie réactive et/ou mécanique, sélectionné dans le groupe des matières synthétiques, sélectionnées parmi le polyéthylène, polypropylène, polyester, Nylon, ABS, époxy, polyuréthanne et PVC.

4. Elément plat à surface sombre et à absorption solaire réduite selon la revendication 1, **caractérisé en ce que**, concernant le substrat, il s'agit d'un matériau sélectionné parmi le groupe des matières synthétiques, sélectionnées parmi le polyéthylène, polypropylène, polyester, Nylon, ABS, époxy, polyuréthanne et PVC, et chargées à l'aide de charges, jusqu'à un pourcentage en volume de 40 à 80 %, qui, dans la plage de longueur d'ondes de 380 à 1500 nm, ont une transparence supérieure à 70 % et dont la taille de particule est choisie de manière à ce qu'ils aient une rétrodiffusion faible dans la plage de la lumière visible.

5. Elément plat à surface sombre et à absorption solaire réduite selon la revendication 1, **caractérisé en ce que** le substrat, après séchage, est formé d'un liant d'abord liquide, chargé par des charges jusqu'à un pourcentage en volume de 40 à 80 %, qui, dans la plage de longueur d'ondes de 380 à 1500 nm, ont une transparence supérieure à 70 % et dont la taille de particule est choisie de manière qu'ils aient une rétrodiffusion faible dans la plage de la lumière visible.

6. Elément plat à surface sombre et à absorption solaire réduite selon l'une des revendications précédentes, **caractérisé en ce que** la réflexion du substrat, dans la plage spectrale de la lumière visible, de 380 à 720 nm, inférieure à 50 %, est obtenue par coloration dans la masse à l'aide de colorants solubles ou avec des pigments.

7. Elément plat à surface sombre et à absorption solaire réduite selon la revendication 6, **caractérisé en ce que** les colorants solubles sont des colorants solubles dans l'eau choisis parmi des colorants acides, des colorants substantifs, des colorants basiques, des colorants de développement, des colorants souffrés et des colorants à base d'anilline, ou bien des colorants dissous à l'aide de solvants sélectionnés parmi des colorants de types Zapon.

8. Elément plat à surface sombre et à absorption solaire réduite selon l'une des revendications précédentes, **caractérisé en ce que** les premiers pigments, conférant, dans la plage de la lumière visible de 380 à 720 nm du revêtement, une réflexion faible inférieure à 50 % et, dans la plage de l'infrarouge proche, de 720 à 1500 nm, une transparence élevée supérieure à 50 %, sont sélectionnés dans le groupe des pigments organiques, sélectionnés dans le groupe des azopigments, choisis dans le groupe des pigments monoazo, disazo, β-naphtène, naphtène AS-, azo verni, benzimidazolone, disazo à condensation, complexe métallique, isoindolinone et isoindoline, ou choisis dans le groupe des pigments polycycliques choisis parmi les pigments phthalocyanines, chinacridones, pérylènes et périnones, thioindigo, anthraquinones, anthrapyrimidines, flavanthrones, pyranthrones, anthanthrones, dioxazines, triarylcarbonium, chio-phthalones, dikéto-pyrrolo-pyrrol.

9. Elément plat à surface sombre et à absorption solaire réduite selon l'une des revendications précédentes, **caractérisé en ce que** les deuxièmes pigments, conférant, dans la plage de la lumière visible de 380 à 720 nm du revêtement, une réflexion faible inférieure à 50 % et, dans la plage de l'infrarouge proche, de 720 à 1500 nm, une réflexion supérieure à 40 %, sont choisis dans le groupe des pigments non-organiques, choisis dans le groupe des oxydes et des hydroxydes métalliques, parmi les pigments de types cadmium, bismuth, chrome, ultramarine, choisis dans le groupe des pigments à base de quartz, se présentant sous forme de plaquettes, revêtus, choisis en particulier dans le groupe des pigments rutile et à phase spinelle mélangée.

10. Elément plat à surface sombre et à absorption solaire réduite selon l'une des revendications 4 à 9, **caractérisé en ce que** les charges sont sélectionnées dans le groupe des minéraux décomposables, sélectionnés parmi les oxydes métalliques, sélectionnés parmi l'oxyde d'aluminium, l'oxyde de magnésium, le quartz, sélectionnés parmi des mélanges d'oxyde métallique, sélectionnés parmi le silicate de zirconium, l'alumine, sélectionnés parmi les carbonates métalliques, sélectionnées parmi le carbonate de calcium, sélectionnés parmi les sulfates métalliques, sélectionnés parmi le sulfate de baryum, dont la taille de particule est réglée à 1 à 3 µm en moyenne, en effectuant un broyage.

11. Elément plat à surface sombre et à absorption solaire réduite selon l'une des revendications précédentes, **caractérisé en ce que** le liant est sélectionné
a) dans le groupe des liants contenant les solvants, comprenant des acrylates, méthacrylates, styrène-acrylates, styrène-méthacrylates, sélectionnés parmi les polyoléfines substituées, sélectionnés parmi le polystyrène et les copolymères de styrène, les résines alkydes, sélectionnés parmi les polyesters ou les polyamides saturés ou insaturés, les polyimides, les polyuréthannes, les polyéthers, les résines époxy, les silicones, les polyéthylènes chlorosulfonés, les polymères fluorés sélectionnés parmi les copolymères acryl fluorés ou les fluorosilicones.
b) dans le groupe des liants aqueux, comprenant le groupe des liants solubles dans l'eau à base d'alkydène, polyester, polyacrylate, époxyde et époxyde ester, dans le groupe des dispersions aqueuses et des émulsions, comprenant des dispersions et des émulsions à base d'acrylate, méthacrylate, styrène-acrylate, polyéthylène, polyéthylène-oxydat, des polymères éthylène-acide acrylique, méthacrylate, copolymères vinylpyrrolidone-acétate de vinyle, polyvinylpyrrolidone, polyisopropylacrylate, polyuréthanne, dispersions dans de la cire, à base de polyéthylène, de polypropylène, Téflon^{®}, cires synthétiques, polymères fluorés, copolymères acryl fluorés en solution aqueuse, fluorosilicone.

12. Elément plat à surface sombre et à absorption solaire réduite selon l'une des revendications précédentes, **caractérisé en ce que** la taille de particule des premiers pigments est inférieure à 0,9 µm et la taille de particule des deuxièmes particules est supérieure ou égale à 0,9 µm.

13. Elément plat à surface sombre et à absorption solaire réduite selon l'une des revendications précédentes, **caractérisé en ce que** la réflexion du substrat dans la plage spectrale de 720 à 1500 nm est supérieure à 70 %.

14. Elément plat à surface sombre et à absorption solaire réduite selon l'une des revendications précédentes, **caractérisé en ce que** la réflexion du substrat et/ou du revêtement dans la plage spectrale de la lumière visible de 380 à 720 nm est inférieure à 40 %.

15. Elément plat à surface sombre et à absorption solaire réduite selon l'une des revendications précédentes, **caractérisé en ce que** les premiers et/ou les deuxièmes pigments dans la plage de la lumière visible de 380 à 720 nm du revêtement, confèrent une faible réflexion, inférieure à 40 %.

16. Elément plat à surface sombre et à absorption solaire réduite selon l'une des revendications 3 à 15, **caractérisé en ce que** la matière alvéolaire, obtenue par voie mécanique, est formée par introduction de microbilles creuses, en verre ou en matière synthétique.

17. Elément plat à surface sombre et à absorption solaire réduite selon l'une des revendications précédentes, **caractérisé en ce que** les épaisseurs de couche du substrat sont dans la plage de 10 µm à 8 mm, en particulier dans la plage de 20 µm à 6 mm.

18. Elément plat à surface sombre et à absorption solaire réduite selon l'une des revendications précédentes, **caractérisé en ce que** les épaisseurs de couche du revêtement sont dans la plage de 10 µm à 500 µm, en particulier dans la plage de 20 µm à 300 µm.

19. Elément plat à surface sombre et à absorption solaire réduite selon la revendication 1, dans lequel, sur au moins une surface d'un substrat, dont la réflexion, dans la plage de la lumière visible, de 380 à 720 nm, est inférieure à 50 % et, dans la plage de l'infrarouge proche, de 720 à 1500 nm, est supérieure à 60 %, on applique et l'on sèche un produit de revêtement, liquide et coloré de façon sensiblement identique, ayant, dans la plage spectrale de 380 à 1500 nm, une transparence supérieure à 70 %, chargé avec des premiers pigments, conférant, dans la plage de la lumière visible, de 380 à 720 nm, du revêtement une faible réflexion, inférieure à 50 % et, dans la plage spectrale de l'infrarouge proche, de 720 à 1500 nm, une transparence supérieure à 50 %, et/ou avec des deuxièmes pigments, conférant, dans la plage de la lumière visible, de 380 à 720 nm, du revêtement, une faible réflexion, inférieure à 50 %, et présentant, dans la plage spectrale de l'infrarouge proche, de 720 à 1500 nm, une réflexion supérieure à 40 %, le produit de revêtement étant appliqué sur le substrat sous forme d'une couche ou d'une pluralité de couches minces.

20. Utilisation d'un élément plat à surface sombre et à absorption solaire réduite formé d'un substrat sombre avec un revêtement de coloration sensiblement identique, tel que défini à la revendication 1, afin de diminuer le chauffage des surfaces usuellement colorées de façon sombre.
